# EUROPEAN PATENT SPECIFICATION

(11) **EP 1 917 197 B1**
(45) Date of publication and mention of the grant of the patent: **16.11.2011**
(21) Application number: 06776875.4
(22) Date of filing: 16.08.2006
(51) Int. Cl.: B65D 75/58, B29C 59/00

(54) **EASY-TO-OPEN PACKAGING COMPRISING A LAMINATE AND PRODUCTION METHOD OF SAID LAMINATE**
EIN LAMINAT UMFASSENDE LEICHT ZU ÖFFNENDE VERPACKUNG UND HERSTELLUNGSVERFAHREN FÜR DAS LAMINAT
EMBALLAGE FACILE A OUVRIR COMPRENANT UN LAMINE ET PROCEDE DE PRODUCTION DUDIT LAMINE

(30) Priority: 26.08.2005 EP 05447190
(43) Date of publication of application: 07.05.2008
(73) Proprietor: Amcor Flexibles A/S, 8700 Horsens (DK)
(72) Inventor: BUNGE, Mauricio, CH-3074 Muri Bei Bern (CH); UTZ, Helmar, CH-3425 Koppingen (CH)
(74) Representative: Heck, Dieter
(86) International application number: PCT/EP2006/008069
(87) International publication number: WO 2007/022903

(56) References cited:
- US-A- 4 903 841
- US-A- 5 129 518
- US-A- 5 312 659
- US-A- 5 878 549
- US-E- R E33 880
- PATENT ABSTRACTS OF JAPAN vol. 015, no. 155 (M-1104), 18 April 1991 (1991-04-18) & JP 03 027930 A (ASAHI CHEM IND CO LTD), 6 February 1991 (1991-02-06)
- PATENT ABSTRACTS OF JAPAN vol. 017, no. 056 (M-1362), 4 February 1993 (1993-02-04) & JP 04 267750 A (TAISEI RAMITSUKU KK), 24 September 1992 (1992-09-24)

## Description

### Field of the invention

The present invention is related to an easy to open packaging comprising a weakened and easy tearable laminate with at least two polymer layer as well as possibly barrier layer and a production method for said laminate.

### Technical background of the invention and prior art

There is currently a growing trend where consumers have less time for cooking. Processed food as "table ready meals" and an increased demand for convenience is becoming more and more important.

These developments are heavily influencing the packaging industry. Packaging now needs to be multifunctional, and properties like easy openability, recloseability, cookability in the package (trays, pouches, etc.) or use of the package as a serving dish, are only some examples being demanded by consumers.

One of the major issues related to convenience is the openability of a package. For many applications with flexible or even rigid packs, like trays with a flexible lid, peelable sealing polymer layers are typical, as they allow an easy reopening of the heat-sealed pack. It is common as well to apply a tear notch to a pouch in the side seal which allows opening of the pouch by tearing off the upper part of the pack. However, one disadvantage of using a simple tear notch is that the tearing of the films is heavily influenced by the film/laminate properties and it becomes difficult to control the direction of the tear propagation because the front and back laminate of the pouch tear in different directions and not in a straight line as desired.

In addition to using specially designed films with low tear propagation force, several methods are known to improve the tear performance (straight lines) further. One option is to use laser perforation as described in EP 0 540 184 or EP 0 357 841. With this method, the laminate can be partially cut (in most cases one layer of a laminate), whereby the tearing will follow the cut line.

In addition to using a laser, other methods to mechanically create "guide lines" are described in DE 10320429, whereby the sealing layer is notched by mechanical means or as in US 2005/0123724, at least one outer layer is grooved and quite similar in JP 42 67750. It is common to all these types of solutions, that at least one layer of a laminate is once or several times nearly fully cut through.
US 5 878 549 discloses an easy-to-open packaging according to the preamble of claim 1.

Although the outlined easy tear solutions work quite effectively in relation to openability of a package, depending on the laminate construction and application, the treatment can heavily affect the barrier properties (oxygen transmission rate) and therefore diminish the shelf-life of the packaged product. Additionally, when, for example, a stand-up pouch is heated in a microwave oven, the tear performance in the treated area of the still hot laminate can diminish dramatically.

### Aims of the invention

The objective of the present invention is to overcome the drawbacks of the described prior art and to offer an easy to open flexible pack as well as a production method thereof, which can be realised at a low cost, while maintaining the barrier properties of the pack, even after additional heat sterilisation of a packaged product, thus yielding optimal tearing properties of the heated packaging laminate.

### Summary of the invention

The present invention discloses an easy-to-open packaging as defined in claim 1, comprising an easy tearable multilayer laminate, said laminate comprising at least two polymer layer wherein at least one of said polymer layer comprises a scratched surface forming a scratched polymer layer, said scratched surface comprising a multitude of scratched lines parallel to the extrusion direction of said scratched polymer layer, the scratched lines creating a predetermined tear direction of the packaging. The scratched lines being a slight weakening a polymer layer and not a cut through the layer.

According to various preferred embodiments of the present invention, one or several of the following additional features are disclosed:
- the depth of the scratched lines represents less than 50% of the thickness said scratched polymer layer;
- the depth of said scratched lines represents less than 20% of the thickness said scratched polymer layer;
- the laminate further comprises barrier layer;
- the barrier layer are selected from the group consisting of metals, metal oxides, metallised polymer films, SiOx, organic barrier layer coated polyester, polypropylene or polyamide, EVOH, PVOH, polyamide, polyvinylidenchloride, polyvinylidenfluoride, polyacrylnitrile;
- the polymer layer are selected from the group consisting of polyolefins, polyesters, polyamides, polyvinylidenchloride, polyvinylidenfluoride, polyvinylchloride, polyacrylate, polymethacrylate and their co-polymers or blends;
- the scratched polymer layer is the outside layer of the laminate;
- the scratched polymer layer is embedded inside the laminate;
- the adhesive layer is directly applied on the scratched surface of the scratched polymer layer;
- the multitude of scratching lines is obtained by mechanical scratching means;
- the scratching means is sandpaper;
- the packaging is a flow pack, a standing pouch or a three/four side sealed pouch;
- the scratched lines from the front and back of the packaging are placed on top of each other and in parallel;
- the packaging comprises at least one tear notch in the zone of the scratched surface;
- the scratched lines have no influence on the oxygen transmission rate of the packaging;
- the unidirectional tear properties of the packaging are the same before and after sterilisation of said packaging.

The present invention further discloses a method for the production of the laminate of claim 1 comprising the steps of:
a) treating a pre-laminate with scratching means for scratching a part of the surface of at least one of his constitutive polymer layer;
b) applying an adhesive directly on the scratched surface;
c) lamination of an additional layer on the adhesived scratched surface.

In preferred embodiments of the production method of the present invention, one or several of the additional features are that:
- the additional layer is a polymer layer selected from the group consisting of polyolefins, polyamides, polyesters, polyacrylates, polymethacrylates, polyacrylnitrile and co-polymers or blends.
- the steps b) and c) are replaced by the application of a cold seal or a hot seal consisting of a polymer dispersion/emulsion.
- the adhesive (10,10') is applied by extrusion lamination or extrusion coating.

### Brief description of the drawings

Fig. 1 represents an easy to open pouch comprising a sand paper treated layer.

Fig. 2 represents a laminate with scratches on each side.

Fig. 3 represents the cross-section of the laminate structure including one layer with scratches.

Fig. 4 represents a schematic overview of the laminate production method with sand paper treatment.

### Detailed description of the invention

It was discovered, that "scratching" the surface of a laminate (e.g. PETP/PE, OPA/PE, PETP/ALU/PP, PETP/ALU/OPA/PP or PETP/OPA/PP...) with sandpaper in machine direction (extrusion direction) results in a perfect straight line tearing along the parallel lines resulting from the "scratches". This was surprising, as the scratches just slightly penetrate the surface of the layer without "cutting" into the layer while all former presented solutions were based on deeper cuts or a multitude of deep cuts in at least one layer.

The scratches function like guiding lines or rails when tearing the laminate in the same direction. The high number of lines guarantees that, even if the straight tearing stops in one of the starting lines, the adjoining scratches function again as guiding lines.

However, it is not attractive to have the "scratches" on the surface, which are quite visible. To solve this problem, it was tested to determine if the "scratches" could be placed inside of a laminate.

The polyamide side of an aluminium oxide coated polyester/polyamide pre-laminate were first treated in the same way (scratched with sandpaper). The treatment did not result in improved tearing along the scratches as expected. The pre-laminate did tear easily in all directions without any preference. A solvent-based adhesive was then applied to the treated polyamide side of the pre-laminate and after evaporation of the solvent in a drying tunnel, a polypropylene film was laminated to the same side. It was quite surprising to discover, that after curing of the adhesive, the laminate then exhibited the same positive tearing characteristics as described above with the outside treated laminates. It was found to be favourable to put the adhesive on the scratched surface directly, as by putting it on the other film, air will be entrapped.

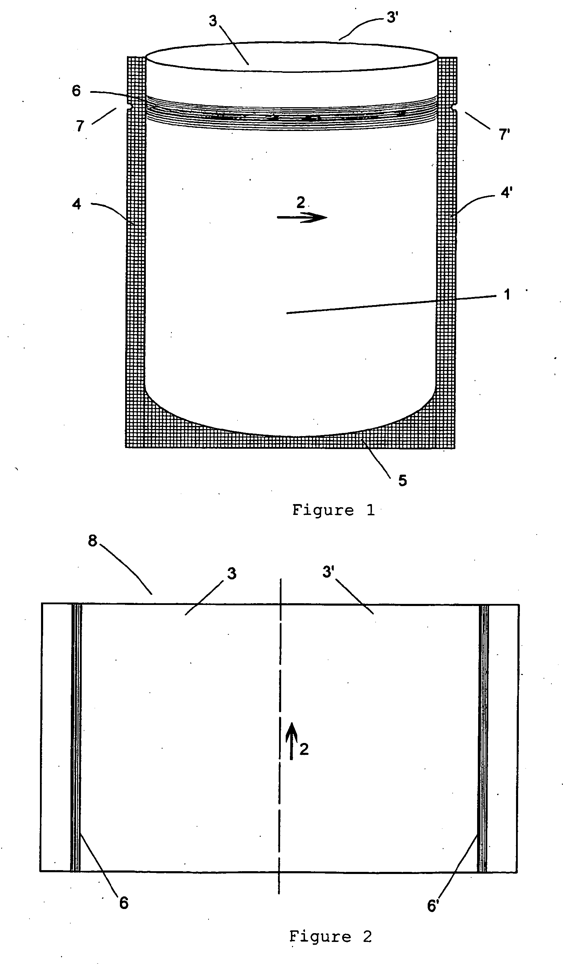

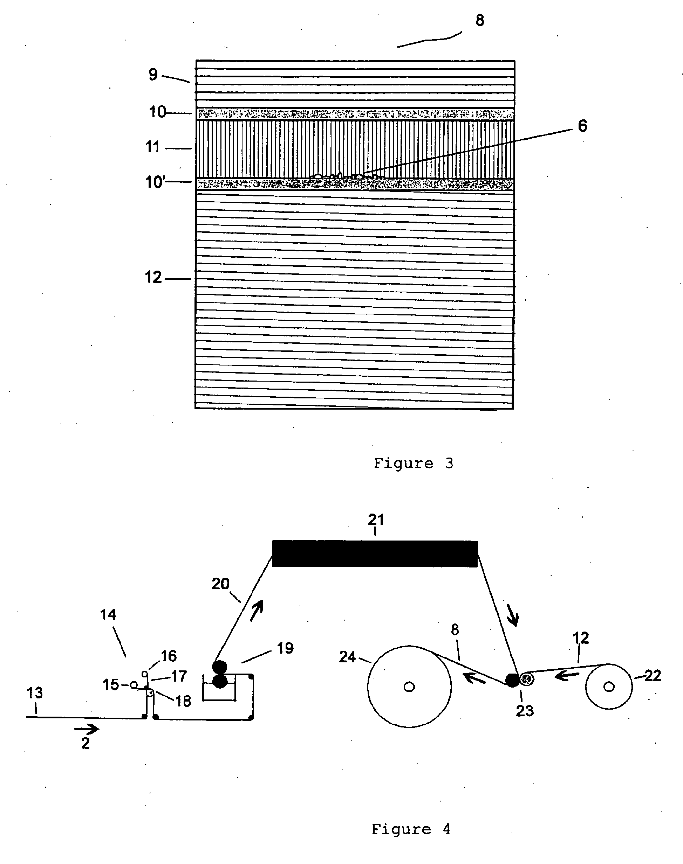

Pouches were produced from the laminate described above in a way, such that the treatment lines from the front and back of the pouch were placed exactly on top of each other and in parallel. Tear notches were applied to the left and right seal of the pouch in the treated laminate area. Figure 1 shows such a pouch (treated zone 6; tear notches 7, 7'). The laminate with two parallel treatment areas 6, 6' to produce the pouch is outlined in figure 2. Figure 3 shows the cross-section of the laminate (AlOx-coated polyester 9, adhesive layers 10 and 10', polyamide 11, polyproylene 12 and treated polyamide surface

The pouches were filled with water and steam sterilised in an autoclave at 121°C for 30 minutes. After heating the filled pouches in a microwave oven, the openability of the hot pouch was tested. The pouches opened at low tear force and the tear propagation of both front and back side were exactly in a straight parallel line.

A comparison of the oxygen permeation of the sterilised pouches with and without treatment did prove that the barrier properties were not influenced.

Figure 4 shows a preferred method to produce the laminate as described above. The inner surface of the pre-laminate 13 is treated with sandpaper in station. 14 (two treatment zones in parallel). A sandpaper band is slowly rewound from unwind station 15 to winding station 16. The sandpaper is pressed with reel 17 against the film transport roller 18. The adhesive is applied on the treated surface in station 19 and the solvent removed from the pre-laminate 20 in the drying channel 21. The pre-laminate is combined with the polypropylene layer 12 in the lamination station 23 and the final laminate wound up in the winder 24.

The adhesive layer 10,10' can be applied by extrusion lamination or extrusion coating, in the case of extrusion lamination, no solvent and therefore drying step is necessary

### Description of a preferred embodiment of the invention

The following examples are representative embodiments of the present invention but are not intended to limit the possible polymer or barrier layer to those recited in the examples.

### Example 1

The polyester side of a laminate PETP-AlOx 12 µm /OPA 15 µm /PP 70 µm produced from Aluminium oxide coated 12 µm polyester (Camclear® 800) adhesive laminated (Liofol® UR 3640 with UR 6055) to a 15 µm bi-axially oriented polyamide (Biaxis® 15), again adhesive laminated (Liofol® UR 3640 with UR 6055) to a 70 µm polypropylene film (Vistalux® PP 210.60) is scratched to create a predetermined tear line. To do this, two stripes of sandpaper (gradation 320) in an appropriate distance to each other are pressed against the bypassing laminate as shown in figure 4 treating station 14.
Pouches as outlined in Figure 1 are produced from this laminate on a bag making machine.
Even when heated in a microwave oven, the pouches open in a straight line at low force.
The oxygen transmission rate of a pouch with and without scratch treatment is < 3 cm³/m² d bar at 23 °C/50 r.h..

### Example 2

The same laminate structure PETP-AlOx 12 µm /OPA 15 µm /PP 70 µm as in Example 1 is produced, but the sandpaper treatment is performed in-line on the polyamide side of a pre-laminate (PETP-AlOx 12 µm /OPA 15 µm) during lamination as shown in figure 4.
The final laminate is again converted to pouches as in Figure 1.
The results of the opening and the barrier testing are similar to Example 1, but as the treatment is embedded in the laminate, the scratches are not visible and the pouches therefore look favourable.

### Example 3

The polyamide side of a pre-laminate PETP 12 µm /ALU 9 µm /OPA 15 µm (polyester 12 µm Mylar® 800, 9 µm Aluminium 8079, 15 µm bi-axially oriented polyamide Biaxis®, adhesive laminated with Liofol® UR 3640/UR 6055) is scratched with sandpaper (gradation 220) and adhesive laminated (Liofol® UR 3640 with UR 6055) to PP (Vistalux® PP 210.60) as shown in Figure 4.
The final laminate is again converted to pouches as in Figure 1.
The results of the opening and the barrier testing are similar to Example 1. Very important, as the treatment is embedded in the laminate, the scratches are not visible.
The oxygen transmission rate of the pouches is not measurable (<0.1 cm³/m² d bar at 23 °C/50 r.h.), as the barrier is too high for conventional measurement equipment.

### Example 4

The polyamide side of a pre-laminate PETP 12 µm /ALU 8 µm /OPA 15 µm (polyester 12 µm Mylar® 800, 9 µm Aluminum 8079, 15 µm bi-axially oriented polyamide Biaxis®, adhesive laminated with Liofol® UR 3640/UR 6055) is scratched with sandpaper (gradation 220) and adhesive laminated (Liofol® UR 3640 with UR 6055) to PE (Groflex® K 0040.010) as shown in Figure 4.
The final laminate is converted to pouches as in Figure 1 on a form fill and seal equipment. The results of the opening and the barrier testing are similar to Example 1. Very important, as the treatment is embedded in the laminate, the scratches are not visible.
The oxygen transmission rate of the pouches is not measurable (<0.1 cm³/m² d bar at 23 °C/50 r.h.), as the barrier is too high for conventional measurement equipment.

### Example 5

The PETP-met. side of a pre-laminate PETP 12 µm / met.-PETP 12 µm (printed polyester side 12 µm Mylar® 800 adhesive laminated with Liofol® UR 3640/UR 6055 to the metallised side of 12 my metallised polyester Mylar® 800) is scratched with sandpaper (gradation 220) and adhesive laminated (Liofol® UR 3640 with UR 6055) to PE (Groflex® K 0040.010) as shown in Figure 4.
The final laminate is converted to pouches as in Figure 1 on a form fill and seal equipment.
The results of the opening are similar to Example 1. Very important, as the treatment is embedded in the laminate, the scratches are not visible.
The oxygen transmission rate of the pouches is <1 cm³/m² d bar at 23 °C/50 r.h. as for the non-treated pouch.

### Example 6

The white OPP side of a pre-laminate OPP 20 µm / OPP white 30 µm (30 µm white Trespaphane® RND adhesive laminated with Trespaphane® GND UK 2615/UR 5020 to the printed side of 20 my Trespaphane® GND) is scratched with sandpaper (gradation 220) and coated with 3 g/m2 cold seal swale IP4180 as shown in Figure 4, whereby the cold seal is applied in the adhesive application station 19, dried in the drying tunnel 21 and directly winded up without adding any further layer. The final laminate is converted to flow-packs on a form-fill-seal equipment.
The packs can be opened very easily and the opening is in a straight line.

[0027] The invention as outlined herein allows production of an easy-to-open package with a straight opening line on both the front and back side of the package. The opening is functional, even when the package is still hot immediately when taken out of a microwave oven. The barrier properties are unaffected.

### Legend

- 1: stand up pouch
- 2: extrusion direction of the polymer film
- 3: front side of the pouch
- 3': back side of the pouch
- 4;4': left and right side seals
- 5: gusset seal
- 6;6': scratched surface (multitude of scratching lines)
- 7,7': tear notches
- 8: laminate
- 9: outside layer
- 10;10': adhesive layer
- 11: middle layer
- 12: sealing layer
- 13: pre laminate
- 14: treatment station
- 15: unwind for sand paper
- 16: upwind for sand paper
- 17: sandpaper
- 18: pressure reel
- 19: adhesive application station
- 20: treated pre laminate with adhesive
- 21: drying tunnel
- 22: unwind unit for sealing layer
- 23: lamination station
- 24: laminate reel for pouch making

## Claims

1. Easy-to-open packaging (1) comprising an easy tearable multilayer laminate (8), said laminate comprising at least two polymer layer wherein at least one of said polymer layer comprises a scratched surface (6,6') forming a scratched polymer layer (11), **characterized by** said scratched surface (6,6') comprising a multitude of scratched lines parallel to the extrusion direction (2) of said scratched polymer layer (11), the scratched lines creating a predetermined tear direction of the packaging (1).

2. Easy-to-open packaging (1) according to claim 1 wherein the depth of said scratched lines represents less than 50% of the thickness said scratched polymer layer (11).

3. Easy-to-open packaging (1) according to claim 1 wherein the depth of said scratched lines represents less than 20% of the thickness said scratched polymer layer (11).

4. Easy-to-open packaging (1) according to claim 1 wherein the laminate further comprises barrier layer.

5. Easy-to-open packaging (1) according to claim 4 wherein said barrier layer are selected from the group consisting of metals, metal oxides, metallised polymer films, SiOx ,organic barrier layer coated polyester, polypropylene or polyamide, EVOH, PVOH, polyamide, polyvinylidenchloride, polyvinylidenfluoride, polyacrylnitrile

6. Easy-to-open packaging (1) according to claim 1 wherein the polymer layer are selected from the group consisting of polyolefins, polyesters, polyamides, polyvinylidenchloride, polyvinylidenfluoride, polyvinylchloride, polyacrylate, polymethacrylate and their co-polymers or blends.

7. Easy-to-open packaging (1) according to claim 1 wherein the scratched polymer layer (11) is the outside layer (9) of the laminate (8).

8. Easy-to-open packaging (1) according to claim 1 wherein the scratched polymer layer (11) is embedded inside the laminate (8).

9. Easy-to-open packaging (1) according to claim 1 wherein an adhesive layer (10,10') is directly applied on the scratched surface (6,6') of the scratched polymer layer (11).

10. Easy-to-open packaging (1) according to claim 1 wherein the multitude of scratching lines is obtained by mechanical scratching means.

11. Easy-to-open packaging according to claim 10 wherein said scratching means is sandpaper (17).

12. Easy-to-open packaging (1) according to claim 1 wherein said packaging is a flow pack, a standing pouch or a three/four side sealed pouch.

13. Easy-to-open packaging (1) according to claim 1 wherein the scratched lines from the front and back of the packaging are placed on top of each other and in parallel.

14. Easy-to-open packaging (1) according to claim 1 wherein said packaging comprises at least one tear notch (7,7') in the zone of the scratched surface (6,6').

15. Easy-to-open packaging (1) according to claim 1 wherein the scratched lines have no influence on the oxygen transmission rate of the packaging.

16. Easy-to-open packaging (1) according to claim 1 wherein the unidirectional tear properties of the packaging are the same before and after sterilisation of said packaging.

17. Method for the production of the laminate of claim 1 comprising the steps of:
a) treating a pre-laminate (13) with scratching means for scratching a part of the surface of at least one of his constitutive polymer layer;
b) applying an adhesive (10,10') directly on the scratched surface (6,6');
c) lamination of an additional layer on the adhesived scratched surface (11).

18. Method for the production of the laminate according to claim 17 wherein the additional layer is a polymer layer selected from the group consisting of polyolefins, polyamides, polyesters, polyacrylates, polymethacrylates, polyacrylnitrile and co-polymers or blends.

19. Method for the production of the laminate according to claim 17 wherein the steps b) and c) are replaced by the application of a cold seal or a hot seal consisting of a polymer dispersion/emulsion.

20. Method for the production of the laminate according to claim 17 wherein the adhesive (10,10') is applied by extrusion lamination or extrusion coating.

## Patentansprüche

1. Leicht zu öffnende Verpackung (1), ein leicht zerreißbares mehrlagiges Laminat (8) umfassend, wobei das Laminat zumindest zwei Polymerschichten umfasst, wobei zumindest eine der Polymerschichten eine verkratzte Oberfläche (6, 6`) aufweist, die eine verkratzte Polymerschicht (11) bildet, **dadurch gekennzeichnet, dass** die verkratzte Oberfläche (6, 6') eine Mehrzahl von eingekratzten Linien parallel zur Extrusionsrichtung (2) der verkratzten Polymerschicht (11) aufweist, wobei die eingekratzten Linien eine vorab definierte Reißrichtung der Verpackung (1) bilden.

2. Leicht zu öffnende Verpackung (1) gemäß Anspruch 1, wobei die Tiefe der eingekratzten Linien weniger als 50 % der Dicke der verkratzten Polymerschicht (11) darstellt.

3. Leicht zu öffnende Verpackung (1) gemäß Anspruch 1, wobei die Tiefe der eingekratzten Linien weniger als 20 % der Dicke der verkratzten Polymerschicht (11) darstellt.

4. Leicht zu öffnende Verpackung (1) gemäß Anspruch 1, wobei das Laminat ferner eine Sperrschicht umfasst.

5. Leicht zu öffnende Verpackung (1) gemäß Anspruch 4, wobei die Sperrschicht aus der Gruppe bestehend aus Metallen, Metalloxiden, metallisierten Polymerfilmen, SiOx, mit organischer Sperrschicht beschichtetem Polyester, Polypropylen oder Polyamid, EVOH, PVOH, Polyamid, Polyvinylidenchlorid, Polyvinylidenfluorid und Polyacrylnitril ausgewählt ist.

6. Leicht zu öffnende Verpackung (1) gemäß Anspruch 1, wobei die Polymerschicht aus der Gruppe bestehend aus Polyolefinen, Polyestern, Polyamiden, Polyvinylidenchlorid, Polyvinylidenfluorid, Polyvinylchlorid, Polyacrylat, Polymethacrylat und deren Copolymeren oder Mischungen ausgewählt ist.

7. Leicht zu öffnende Verpackung (1) gemäß Anspruch 1, wobei die eingekratzte Polymerschicht (11) die Außenschicht (9) des Laminats (8) bildet.

8. Leicht zu öffnende Verpackung (1) gemäß Anspruch 1, wobei die eingekratzte Polymerschicht (11) innerhalb des Laminats (8) eingebettet ist.

9. Leicht zu öffnende Verpackung (1) gemäß Anspruch 1, wobei eine Haftschicht (10, 10') direkt auf die eingekratzte Oberfläche (6, 6') der eingekratzten Polymerschicht (11) aufgetragen ist.

10. Leicht zu öffnende Verpackung (1) gemäß Anspruch 1, wobei die Mehrzahl von eingekratzten Linien durch mechanische Kratzmittel erhalten wird.

11. Leicht zu öffnende Verpackung gemäß Anspruch 10, wobei das Kratzmittel ein Schleifpapier (17) ist.

12. Leicht zu öffnende Verpackung (1) gemäß Anspruch 1, wobei die Verpackung ein Flow Pack, ein Standbeutel oder ein auf drei/vier Seiten versiegelter Beutel ist.

13. Leicht zu öffnende Verpackung (1) gemäß Anspruch 1, wobei die eingekratzten Linien vorne und hinten auf der Verpackung übereinander und parallel zueinander platziert sind.

14. Leicht zu öffnende Verpackung (1) gemäß Anspruch 1, wobei die Verpackung zumindest eine Einreißkerbe (7, 7`) im Bereich der eingekratzten Oberfläche (6, 6') umfasst.

15. Leicht zu öffnende Verpackung (1) gemäß Anspruch 1, wobei die eingekratzten Linien keine Auswirkung auf die Sauerstoffübertragungsrate der Verpackung haben.

16. Leicht zu öffnende Verpackung (1) gemäß Anspruch 1, wobei die ungerichteten Reißeigenschaften der Verpackung vor und nach Sterilisation der Verpackung gleich sind.

17. Verfahren zur Herstellung des Laminats gemäß Anspruch 1, die folgenden Schritte umfassend :
a) Behandeln eines Vorlaminats (13) mit einem Kratzmittel, um einen Teil der Oberfläche zumindest einer dessen konstitutiven Polymerschichten einzukratzen;
b) Auftragen eines Haftmittels (10, 10') direkt auf die eingekratzte Oberfläche (6, 6');
c) Laminieren einer zusätzlichen Schicht auf die mit Haftmittel versehene eingekratzte Oberfläche (11).

18. Verfahren zur Herstellung des Laminats gemäß Anspruch 17, wobei die zusätzliche Schicht eine Polymerschicht ist, die aus der Gruppe bestehend aus Polyolefinen, Polyamiden, Polyestern, Polyacrylaten, Polymethacrylaten, Polyacrylnitril und Copolymeren oder Mischungen ausgewählt ist.

19. Verfahren zur Herstellung des Laminats gemäß Anspruch 17, wobei die Schritte b) und c) durch das Auftragen einer Kaltversiegelung oder einer Heißversiegelung, die aus einer Polymerdispersion/-emulsion besteht, ersetzt werden.

20. Verfahren zur Herstellung des Laminats gemäß Anspruch 17, wobei das Haftmittel (10, 10') durch Extrusionslaminierung oder Extrusionsbeschichtung aufgetragen wird.

## Revendications

1. Emballage à ouverture facile (1) comprenant un stratifié multicouche facile à déchirer (8), ledit stratifié comprenant au moins deux couches de polymère, dans lequel au moins l'une desdites couches de polymère comprend une surface rayée (6,6') formant une couche de polymère rayée (11), **caractérisé en ce que** ladite surface rayée (6,6') comprend une multitude de lignes de rayure parallèles à la direction d'extrusion (2) de ladite couche de polymère rayée (11), les lignes de rayure créant une direction de déchirure prédéterminée de l'emballage (1).

2. Emballage à ouverture facile (1) selon la revendication 1, **caractérisé en ce que** la profondeur desdites lignes de rayure représente moins de 50% de l'épaisseur de ladite couche de polymère rayée (11).

3. Emballage à ouverture facile (1) selon la revendication 1, **caractérisé en ce que** la profondeur desdites lignes de rayure représente moins de 20% de l'épaisseur de ladite couche de polymère rayée (11).

4. Emballage à ouverture facile (1) selon la revendication 1, **caractérisé en ce que** le stratifié comprend en outre une couche barrière.

5. Emballage à ouverture facile (1) selon la revendication 4, **caractérisé en ce que** ladite couche barrière est choisie parmi le groupe constitué par les métaux, les oxydes métalliques, les films polymères métallisés, SiOx, le polyester, polypropylène ou polyamide revêtu d'une couche barrière organique, l'EVOH, le PVOH, le polyamide, le polychlorure de vinylidène, le polyfluorure de vinylidène, le polyacrylonitrile.

6. Emballage à ouverture facile (1) selon la revendication 1, **caractérisé en ce que** les couches de polymère sont choisies parmi le groupe constitué par les polyoléfines, les polyesters, les polyamides, le polychlorure de vinylidène, le polyfluorure de vinylidène, le polychlorure de vinyle, le polyacrylate, le polyméthacrylate et leurs co-polymères ou mélanges.

7. Emballage à ouverture facile (1) selon la revendication 1, **caractérisé en ce que** la couche de polymère rayée (11) est la couche extérieure (9) du stratifié (8).

8. Emballage à ouverture facile (1) selon la revendication 1, **caractérisé en ce que** la couche de polymère rayée (11) se trouve à l'intérieur du stratifié (8).

9. Emballage à ouverture facile (1) selon la revendication 1, **caractérisé en ce que** une couche adhésive (10,10') est directement appliquée sur la surface rayée (6,6') de la couche de polymère rayée (11).

10. Emballage à ouverture facile (1) selon la revendication 1, **caractérisé en ce que** la multitude de lignes de rayure est obtenue par des moyens de rayure mécaniques.

11. Emballage à ouverture facile (1) selon la revendication 10, **caractérisé en ce que** lesdits moyens de rayure sont du papier abrasif (17).

12. Emballage à ouverture facile (1) selon la revendication 1, **caractérisé en ce que** ledit emballage est une enveloppe thermosoudée, un sachet vertical ou un sachet scellé sur trois/quatre côtés.

13. Emballage à ouverture facile (1) selon la revendication 1, **caractérisé en ce que** les lignes de rayure partant de l'avant et de l'arrière de l'emballage sont placées au-dessus les unes des autres et en parallèle.

14. Emballage à ouverture facile (1) selon la revendication 1, **caractérisé en ce que** ledit emballage comprend au moins une encoche de déchirure (7,7') dans la zone de la surface rayée (6,6').

15. Emballage à ouverture facile (1) selon la revendication 1, **caractérisé en ce que** les lignes de rayures n'ont pas d'influence sur le taux de transmission d'oxygène de l'emballage.

16. Emballage à ouverture facile (1) selon la revendication 1, **caractérisé en ce que** les propriétés de déchirure unidirectionnelle de l'emballage sont les mêmes avant et après stérilisation dudit emballage.

17. Procédé pour la production du stratifié de la revendication 1, comprenant les étapes consistant à :
a) traiter un pré-stratifié (13) avec des moyens de rayure pour rayer une partie de la surface d'au moins l'une de ses couches de polymère constitutives ;
b) appliquer un adhésif (10,10') directement sur la surface rayée (6,6') ;
c) laminer une couche additionnelle sur la surface rayée pourvue d'adhésif (11).

18. Procédé pour la production d'un stratifié selon la revendication 17, **caractérisé en ce que** la couche additionnelle est une couche de polymère choisie parmi le groupe constitué par les polyoléfines, les polyamides, les polyesters, les polyacrylates, les polyméthacrylates, le polyacrylonitrile et leurs copolymères ou mélanges.

19. Procédé pour la production d'un stratifié selon la revendication 17, **caractérisé en ce que** les étapes b) et c) sont remplacées par l'application d'un joint d'étanchéité à froid ou d'un joint d'étanchéité à chaud constitué d'une dispersion/émulsion de polymère.

20. Procédé pour la production d'un stratifié selon la revendication 17, **caractérisé en ce que** l'adhésif (10,10') est appliqué par extrusion-laminage ou par extrusion-enduction.
